**Europäisches Patentamt**

**European Patent Office**

**Office européen des brevets**

(19)

(11) Veröffentlichungsnummer : **0 252 995 B1**

(12) ## EUROPÄISCHE PATENTSCHRIFT

(45) Veröffentlichungstag der Patentschrift :
18.03.92 Patentblatt 92/12

(51) Int. Cl.⁵ : **A01G 31/02**

(21) Anmeldenummer : **87900740.9**

(22) Anmeldetag : **17.12.86**

(86) Internationale Anmeldenummer :
**PCT/SU86/00132**

(87) Internationale Veröffentlichungsnummer :
**WO 87/03777 02.07.87 Gazette 87/14**

(54) **ANORDNUNG ZUR ZUCHT VON PFLANZEN.**

(30) Priorität : **24.12.85 SU 3988673**
**24.12.85 SU 3989055**

(43) Veröffentlichungstag der Anmeldung :
**20.01.88 Patentblatt 88/03**

(45) Bekanntmachung des Hinweises auf die
Patenterteilung :
**18.03.92 Patentblatt 92/12**

(84) Benannte Vertragsstaaten :
**AT DE FR GB IT**

(56) Entgegenhaltungen :
**DE-A- 2 037 013**
**GB-A- 1 545 275**
**GB-A- 2 075 323**
**SU-A- 969 211**

(73) Patentinhaber : **TREST 'JUZHVODOPROVOD'**
**ul. Gagarina, 135/1**
**Krasnodar, 350049 (SU)**

(72) Erfinder : **SHISHKIN, Viktor Vasilievich**
**ul. Festivalnaya, 16-5**
**Krasnodar, 350049 (SU)**

(74) Vertreter : **Finck, Dieter et al**
**Patentanwälte v. Füner, Ebbinghaus, Finck**
**Mariahilfplatz 2 & 3**
**W-8000 München 90 (DE)**

EP 0 252 995 B1

## Beschreibung

Die Erfindung betrifft eine Anlage zur Pflanzenzucht, mit einer teilweise in Form eines flexiblen Schlauchs und teilweise als Kammergehäuse ausgeführten, luftdicht abgeschlossenen Kammer, mit einer Zufuhreinrichtung für die Zufuhr eines Arbeitsmittels und mit einer Zuleitungseinrichtung für die Zuleitung eines Nährbodens in die Kammer, wobei in dem Kammergehäuse auf einer Antriebstrommel ein elastisches gelochtes Band aufgebracht ist.

Eine gattungsgemäße Anlage ist aus der DE-OS 2 037 013 bekannt. Diese Druckschrift zeigt ein schwimmendes Gewächshaus in Form eines flexiblen Schlauchs, der durch inneren Überdruck auseinander gehalten wird. Beidseitig des Schlauches sind Schwimmkörper angebracht, um den Schlauch in einem stabilen Zustand auf der Wasseroberfläche zu halten. Der Schlauch ist mit einem am Ufer befindlichen Raum verbunden, der unter Überdruck steht. Die bekannte Anlage kann nur zur Aufzucht von Pflanzen auf einer Wasseroberfläche verwendet werden. Daher können auch nur schwimmfähige Materialien als Pflanzenträger verwendet werden. Die Länge des Schlauches ist während des Einsatzes der Anlage konstant. Die Anlage kann also nicht während des Einsatzes an bestimmte Betriebsbedingungen angepaßt werden.

Der Erfindung liegt die Aufgabe zugrunde, mit konstruktiv einfachen Mitteln eine vielseitig verwendbare Anlage zur Pflanzenzucht zu schaffen, deren Aufbau an bestimmte Betriebsbedingungen anpassbar ist.

Diese Aufgabe wird ausgehend von dem eingangs erwähnten Stand der Technik dadurch gelöst, daß das eine Ende des flexiblen Schlauchs mit dem freien Ende des gelochten Bandes und das andere Ende des flexiblen Schlauchs nach außen umgestülpt und mit seinem Umfang am Kammergehäuse befestigt ist.

Bei Verwendung eines flüssigen Nährbodens ist es von Vorteil, das gelochte Band in Form einer Rinne mit positivem Auftrieb auszuführen.

Durch die erfindungsgemäße Ausgestaltung der Anlage wird es ermöglicht, die Größe des Saatfelds beliebig zu verändern, indem man die Kammer mit dem entsprechenden Arbeitsmitteldruck beaufschlagt.

Da die Bewegung des Schlauches durch das Arbeitsmittel erfolgt, ist es möglich, die Aussaat und die Ernte sowie die Einstellung der Saatfläche zu automatisieren. Die Aussaat und die Ernte kann außerdem an der gleichen Stelle der Anlage stattfinden. Dies erhöht die Leistungsfähigkeit und den Arbeitskomfort beträchtlich.

Wenn der Schlauch aus wärmeisolierendem Material, beispielsweise aus einem die Sonnenenergie absorbierendem Polyethylen besteht, verringert sich die zur Beheizung der Pflanzen notwendige Energie.

Die erfindungsgemäße Anlage kann zur Pflanzenzucht auf der Oberfläche von Wasserbecken bzw. unter Wasser angewendet werden. Es können damit auch Pflanzen an verschiedenen unnützen Böden, Mooren, auf Dächern etc. aufgezogen werden. Die Erfindung kann auch zur Aufzucht von biologischen Produkten, wie z.B Wasserpflanzen oder Fischen, im Wasser oder im Weltall verwendet werden.

Ausführungsbeispiele der Erfindung werden nachstehend anhand von Zeichnungen näher erläutert. Es zeigt:

Fig. 1 im Längsschnitt eine erste Ausführungsform einer Anlage zur Pflanzenzucht für trockenen Nährboden;

Fig. 2 im Längsschnitt eine zweite Ausführungsform der Anlage zur Pflanzenzucht für flüssige Nährboden;

Fig. 3 den Schnitt III-III von Fig. 2

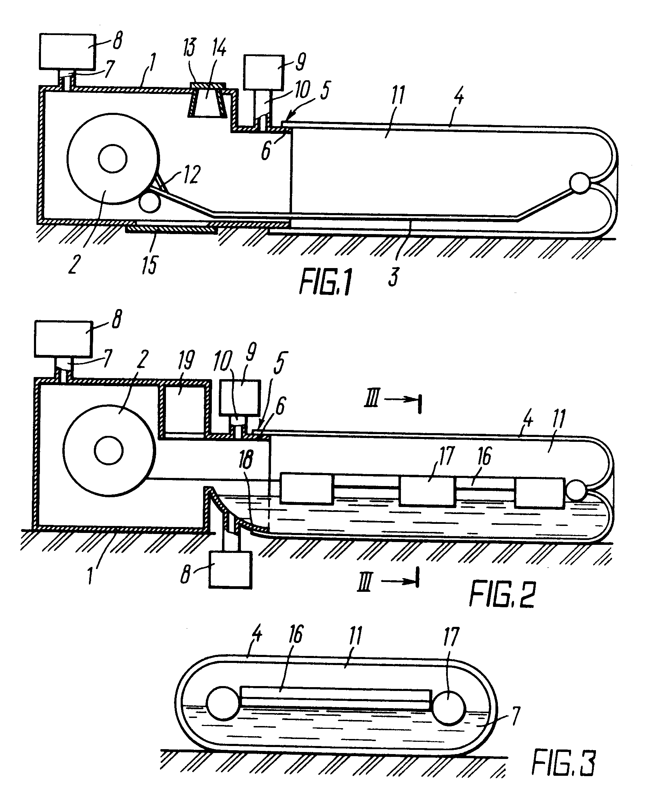

Die Anlage zur Pflanzenanzucht enthält eine luftdicht abgeschlossene Kammer 11(Fig. 1), in deren Innenraum eine Antriebstrommel 2 untergebracht ist. Auf diese Antriebstrommel 2 ist ein gelochtes Band 3 aufgewickelt. Ein Teil der Kammer 11 ist in Form eines elastischen Schlauches 4 ausgeführt, der ebenfalls auf die Antriebstrommel 2 aufgewickelt werden kann. Ein Ende des Schlauchs 4 ist mit dem freien Ende des gelochten Bandes 3 verbunden, während das andere Ende des Schlauchs 5 nach außen umgestülpt und mit seinem Umfang an einem Stutzen 6 eines Kummergehäuses 1 befestigt ist.

Das Band 3 kann auch als Netz ausgeführt werden Das Kummergehäuse 1 ist über einen Stutzen 7 mit einer Zufuhrein richtung 8 zum Zuführen eines Arbeitsmittels, beispielsweise Druckgas bzw. eines Gasgemisches der vorgegebenen Zusammensetzung gekoppelt. Eine Zuleitungseinrichtung 9 zum Zuleiten eines Nährbodens wie Nährlösung, Wasser, trockene Nährmischung usw. steht über einen Stutzen 10 mit dem Innenraum der Kammer 11 in Verbindung. In der Nähe der Antriebstrommel 2 ist ein Abstreicheisen 12 montiert, das mit dem Band 3 in Wechselwirkung tritt. Die Antriebstrommel 2 selbst ist aus der waagerechten in die senkrechte Ebene verschwenkbar. Das Kammergehäuse 1 ist weiter mit einem abnehmbaren Deckel 13 versehen, in den ein Trichter 14 zum Zuteilen der Erde mit dem Saatgut in die Kammer 11 eingebaut ist. Im Unterteil ist das Kammergehäuse 1 mit einem abnehmbaren Lochdeckel 15 zur Entfernung der Pflanzen ausgerüstet.

Die erfindungsgemäße Anlage zur Pflanzenanzucht arbeitet wie folgt. Vor Beginn des Betriebes wird die Antriebstrommel 2 in ihre waagerechte Stellung verschwenkt und Druckluft durch den Stutzen 7 mit Hilfe der Zufuhreinrichtung 8 in die Kammer 11 hineingedrückt. Der Schlauch 4 beginnt sich von der Antriebstrommel 2 abzuwickeln und herauszuziehen. Nach Abwickeln des ganzen Schlauchs 4 von der Antriebstrommel 2 wird dann das gelochte Band 3 von dieser abgewickelt, wobei zu diesem Zeitpunkt Erde mit dem Saatgut durch den Trichter 14 im Deckel 13 auf das Band 3 zugegeben wird.

Nach dem Verlegen des Schlauchs 4 auf dessen ganze Länge legt sich das Band 3 an dessen Innenfläche an, wie es aus der Fig. 1 ersichtlich ist. Hiernach wird eine notwendige Menge der Nährlösung mittels der Zuleitungseinrichtung 9 in den Innenraum der Kommer 11 eingepumpt.

Beim Wachsen der Pflanzen wird innerhalb des Schlauchs 4 ein Überdruck des vorgeschriebenen Gasgemisches entwickelt, durch welchen der Schlauch 4 in aufgeblasenen Zustand gehalten und ein intensives Wachstum der Pflanzen begünstigt wird. Durch ein abwechselndes Zuführen zum Innenraum und Auslassen einer geringen Menge des Arbeitsmittels aus diesem mit Hilfe der Zufuhreinrichtung 8 wird durch Aufspannen und Nachlassen des Bandes 3 eine Auflockerung des Bodens in unmittelbarer Nähe zu den Pflanzenwurzeln durchgeführt. Durch Zugabe von Wasser bzw. Nährlösung in den Innenraum der Kammer 11 werden die Pflanzen berieselt bzw. ernährt. Durch die Zufuhr eines heißen bzw. kalten Arbeitsgasgemisches in den Innenraum der Kammer 11 limit Hilfe der Zufuhreinrichtung 8 werden die erforderlichen Temperaturverhältnisse für die Pflanzen geschaffen. Nachdem die Pflanzen reif werden, wird eine Zusatzmenge des Arbeitsgasgemisches in den Innenraum der Kammer 11 zusätzlich eingeführt und der Schlauch 4 stärker aufgeblasen, wobei sich das Band 3 ganz stark aufgespannt geradestreckt, während die Erde durch das Band hindurchgedrückt wird und auf den Schlauch 4 herunterfällt.Dadurch werden die Pflanzenwurzeln von der Erde abgetrennt.

Hiernach wird die Druckluft aus dem Innenraum der Kammer 11 über den geöffneten Deckel 13 herausgelassen. Dann wird der Antrieb der Trommel 2 eingeschaltet und das Band 3 mit dem Schlauch 4 zusammen auf diese aufgewickelt. Das Gasgemisch wird dabei durch den Trichter 14 im Deckel 13 aus dem Schlauch 4 entfernt. Beim Aufwickeln des Bandes 3 auf die Trommel 2 streicht das Abstreicheisen 12 von diesem die Pflanzen ab. Diese abgestrichenen Pflanzen werden über die Öffnung 15 aus der Kammer 11 herausgenommen. Nach dem Herausnehmen bei der Ernte wird die Erde durch die Öffnung 15 entfernt, während der Schlauch 4 fortlaufend auf die Trommel 2 aufgewickelt wird. Hiernach wiederholt sich das Arbeitsspiel der erfindungsgemäßen Anlage.

Bei der Ausführungsform von Fig. 2 ist im Unterschied zur Ausführungsform von Fig. 1 das gelochte Band 3 in Form einer flexiblen, gelochten Rinne 16 ausgeführt, die mit aufblasbaren Schwimmkörpern 17 ausgerüstet ist. Die erwähnte Rinne 16 kann auch anders aufgebaut werden, muß jedenfalls aber einen positiven Auftrieb besitzen.

Der Stutzen 6 ist hier mit einer dessen Querschnitt teilweise verdeckenden Trennwand 18 versehen. Der Teil des Innenraums der Kammer 11 zwischen dieser Trennwand 18 und dem Schlauch 4 steht mit der Zuleitungseinrichtung 9 zum Zuleiten der Nährlösung in Verbindung. Der ganze Innenraum der Kammer 11 kommuniziert mit der Zufuhreinrichtung 8 zur Zufuhr des Arbeitsmittels, Druckgases. Das Kammer gehäuse 1 ist mit einem Abteil 19 ausgerüstet, durch welchen die Hilfsoperationen, Aussaat und Herausnehmen bei der Ernte vorgenommen werden können.

Wenn bes der Ausführungsform von Fig. 2 Arbeitsmittel in den Schlauch 4 mittels der Zufuhreinrichtung 8 gepumpt wird beginnt sich der Schlauch 4 herauszuziehen. In die flexible gelochte Rinne 16 wird über das Abteil 19 Torf oder ein anderes Gemisch mit dem Saatgut der Pflanzen geschüttet. Nachdem der ganze Schlauch 4 von der Antriebstrommel 2 abgewickelt ist, wird in diesen eine Nährlösung in einer zur Befeuchtung des Torfes ausreichenden Menge durch die Zuleitungseinrichtung 9 und den Stutzen 10 hineingeführt. Mit der fortlaufenden Verdampfung der Lösung wird diese nachgegeben. Mit dem Ausschlagen des Saatgutes müssen die Schwimmkörper 17 nach einem bekannten Verfahren aufgeblasen werden, während die Menge der Nährlösung derart geregelt wird, daß eine Gasschicht zwischen der Torf-und Lösungsschicht übrigbleibt, um dem Verfaulen der Wurzeln von Pflanzen vorzubeugen.

Bei der Vegetation werden die Zusammensetzungen der Nährlösung und Gasmischung mit Hilfe der Vorrichtungen 8, 9 geregelt. Nachdem die Pflanzen groß gewachsen sind, wird die Rinne 16 allmählich auf die Antriebstrommel aufgewickelt und die Ernte herausgenommen.

Der Schlauch 4 kann aus einem durchsichtigen Polymer hergestellt werden. Die Länge des Schlauchs 4 wird in Abhängigkeit von der zur Anordnung der Anlage zur Verfügung stehenden Betriebsfläche gewählt.

## Patentansprüche

1. Anlage zur Pflanzenzucht, mit einer teilweise in Form eines flexiblen Schlauchs (4) und teilweise als Kammergehäuse (1) ausgeführten, luftdicht abgeschlossenen Kammer (11), mit einer Zufuhreinrichtung (8) für die Zufuhr eines Arbeitsmittels und mit einer Zuleitungseinrichtung (9) für die Zuleitung eines Nährbodens in die Kammer (11), wobei in dem Kammergehäuse (1) auf einer Antriebstrommel (2) ein elastisches gelochtes Band (3) aufgebracht ist, dadurch gekennzeichnet, daß das eine Ende des flexiblen Schlauchs (4) mit dem freien Ende des gelochten Bandes (3) und das andere Ende (5) des flexiblen Schlauchs (4) nach außen umgestülpt und mit seinem Umfang am Kammergehäuse (1) befestigt ist.

2. Anlage nach Anspruch 1, dadurch gekennzeichnet, daß das gelochte Band (3) in Form einer Rinne (16) mit positivem Auftrieb ausgeführt ist.

## Claims

1. Installation for plant cultivation, with an airtightly sealed chamber (11) designed partially in the form of a flexible hose (4) and partially as a chamber housing (1), with a supply device (8) for the supply of a working fluid and with a feed device (9) for feeding a nutrient medium into the chamber (11), a flexible perforated belt (3) being mounted on a driving drum (2) in the chamber housing (1), characterised in that one end of the flexible hose (4) is secured to the free end of the perforated belt (3) and the other end (5) of the flexible hose (4) is folded over outwards and secured by its periphery to the chamber housing (1).

2. Installation according to Claim 1, characterised in that the perforated belt (3) is designed in the form of a channel (16) with positive buoyancy.

## Revendications

1. Installation pour la culture des végétaux avec une chambre hermétiquement obturée (11) ayant partiellement la forme d'un tuyau flexible (4) et partiellement la forme d'un boîtier (1), avec un système d'amenée (8) pour l'amenée d'une substance active et avec un système d'alimentation pour l'alimentation en une couche nourricière dans la chambre (11), une bande élastique perforée (3) étant prévue dans le boîtier (1) de la chambre sur un tambour d'entraînement (2), caractérisée en ce qu'une extrémité du tuyau flexible (4) est fixée à l'extrémité libre de la bande perforée (3) et l'autre extrémité (5) du tuyau flexible (4) est retournée vers l'extérieur et est fixée par son pourtour au boîtier (1) de la chambre.

2. Installation selon la revendication 1, caractérisée en ce que la bande perforée (3) a la forme d'une goulotte (16) avec une portance positive.

FIG.1

FIG.2

FIG.3